# EUROPEAN PATENT APPLICATION

(11) **EP 1 202 510 A1**
(43) Date of publication of application: **02.05.2002**
(21) Application number: 00309579.1
(22) Date of filing: 30.10.2000
(51) Int. Cl.: H04L 25/06

(54) **Method and apparatus for adjusting the decision threshold at a receiver**

(71) Applicant: LUCENT TECHNOLOGIES INC., Murray Hill, New Jersey 07974-0636 (US)
(72) Inventor: Haunstein, Herbert, Dormitz, Nuremberg 91077 (DE); Munk, Andreas, 90489 Nuernberg (DE); Roell, Georg, 92353 Postbauer-Heng (DE); Schulien, Christopher, Dr., Altdorf Bei Nuernberg 90518 (DE); Sticht, Konrad, Eschenbach 92676 (DE)
(74) Representative: Buckley, Christopher Simon Thirsk

(57) **Abstract**

A method of adjusting the decision threshold at a receiver for a data flow comprising different signal levels having logical high (1) and low (0) signal values and signal transitions positioned therebetween, wherein each two . Pairs of adjacent signal values and the transition therebetween are sampled and checked whether an "irregular" transition occurs which is a transition between two adjacent signal values having the same level, when such transition deviates from the respective adjacent signal value. Such irregular transitions are determined and the decision threshold is adjusted dependent from the kind of deviation of the irregular transition.

## Description

### Field of Invention

The invention relates to a method of adjusting the decision threshold at a receiver for a data flow, particularly carried by optical signals, comprising different signal levels having logical "high" and "low" signal values and signal transitions positioned therebetween, wherein each two adjacent signal values and the transition therebetween are sampled, and when sampled signals are distorted the transition between two adjacent signal values having the same level may take a value which deviates from the respective adjacent signal value and constitutes an "irregular" transition.

### Background of the Invention

In long distance transmission systems at high bit rates over optical fibers, the signals carrying the data flow are distorted due to chromatic dispersion, polarization mode dispersion, transmitter chirp, extinction ratio and others. The optical signal to noise ratio (OSNR) is reduced and is critical in optically amplified systems. It is known to use a decision threshold which is fixed onto a value dependent on the mean signal level or on the peak signal level in the long term average. However, the kind of signal distortion may change so that a fixed threshold is not optimal under these circumstances.

### Summary of the Invention

It is an object of the present invention to provide a method and an apparatus of adjusting the decision threshold at a receiver for a data flow so that an optimum decision threshold can be established also when the kind of distortion changes during transmission.

A further object of the invention is to provide an apparatus for adjusting the decision threshold at a receiver which can be implemented at low costs.

The invention is defined in claims 1 and 4.

The invention is based on the fact that irregular transitions occur between logical signal values of the same level, i.e. a low transition may occur between two high signal values which is a signal pattern "against the rules", the transition is "irregular". With the invention, those irregular transitions are evaluated to find the direction in which the decision threshold level of the receiver should be changed to adjust on the dynamic behavior of the distortions to some extent, dependent on the required bit rate at the receiver output.

The irregular transitions may be detected at high "1" or at low "0" signal values and by counting or integrating all irregular transitions for the ones "1" and zeros"0" an optimal decision threshold can be achieved. The circuitry for achieving this purpose is at low additional costs since the signal values and the transitions can be extracted from a phase detector which is used for recovering the timing or clock frequency for sampling the data flow.

### Brief description of the drawings

Fig. 1 is a plot of the number of signal values 0 or 1 versus signal power at the receiver,
Fig. 2 is a receiver with phase lock loop,
Fig. 3 is a scheme of a sampled data flow, and
Fig. 4 is a circuit diagram of phase detector and adaptive threshold control circuit.

### Detailed Description

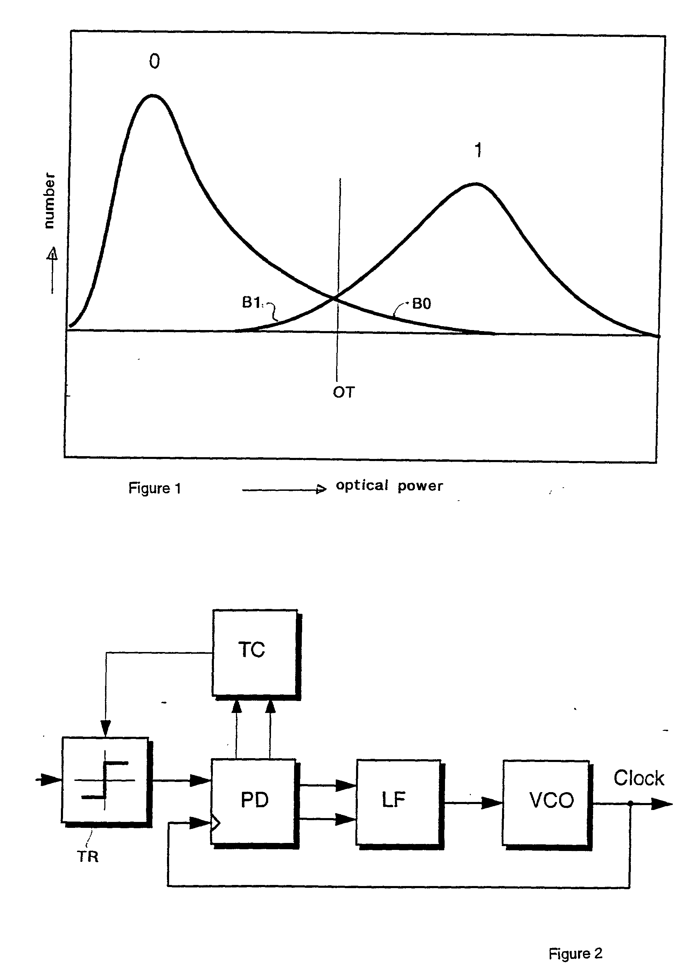

Fig. 1 shows how logical high "1" and low "0" signal values are transmitted and sampled at the receiver end. The distributions of the received values are concentrated about peak levels at 0 and 1 as shown, the distribution plots of each signal value 1 or 0 extend in the field of the neighboring distribution characteristic, i.e. the distribution characteristic for the high signals has branch B1 crossing the distribution characteristic for logical low signals 0, and the distribution characteristic for low signal values has a branch B0 extending into the region of the distribution characteristic for high signals 1. These branches B1 and B0 indicate deficient signals. The size of the area between abscissa and the branches B1 B0 is a measure of the number of sampled deficient signal values. A line OT for optimum threshold is drawn through the enclosed area B1, B0 so hat the size of each partial area is equal to one another. The decision threshold is considered to be at an optimum is the number of the deficient ones (1) is equal to the number of deficient zeros (0).

Fig. 2 shows a block diagram of a receiver. The incoming data line is connected to a trigger TR which decides whether the signal is above or below a decision threshold. The threshold of the trigger TR can be changed by a threshold control circuit TC. The output of trigger TR is connected to a phase detector PD, which recovers the timing information in the transmitted data flow. To that end, the phase detector PD is connected to a loop filter LF and an analogue voltage controlled oscillator VCO. The output of the voltage controlled oscillator VCO is indicated with "clock" and fed back to a timing input of the phase detector PD. The circuit functions to sample the incoming data with the clock frequency and to recover timing information for the voltage controlled oscillator VCO to generate the correct clock frequency with correct phase for sampling the incoming signal.

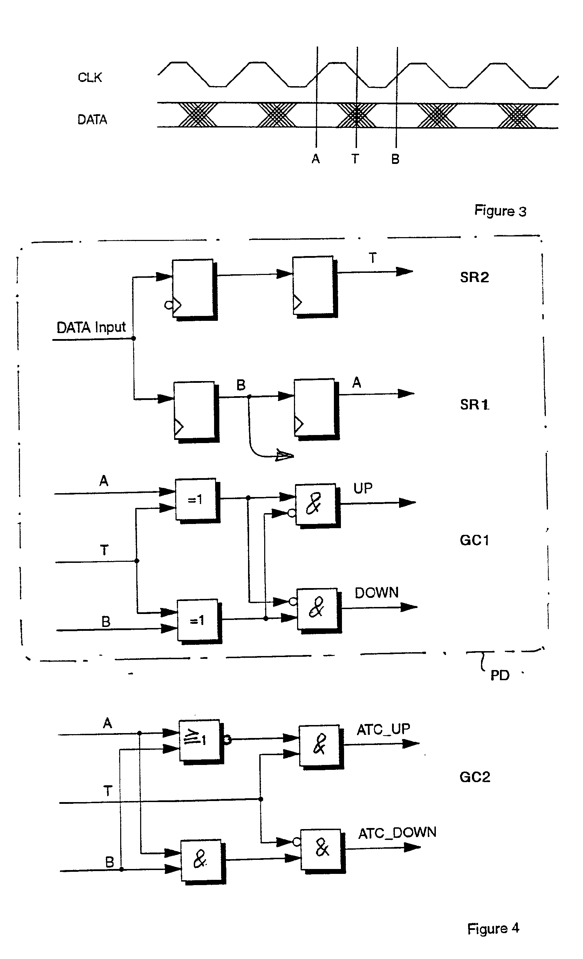

In Fig. 4, an example for implementing the phase detector PD is shown. The incoming data are connected to a first shift register SR1 and a second shift register SR2. Shift register SR1 has two flip flops which form stages or cells in a row and receive the sampling probes A, B in an appropriate time interval indicated in Fig. 3. The sampling probes are shifted from stage to stage in the timing of the clock and fed to a first gate circuit GC1 in the appropriate timing. The second shift register SR2 also has two stages or cells with flip flops where the first stage is addressed at timing T in Fig. 3, yet shifted with the rising edge of the clock pulse. The outputs at A, B, T of the shift registers are connected to input stages of the gate circuit GC1 which are configured as EXOR gates. Each EXOR gate is connected to a pair of AND gates, each having a normal input and an inverted input. The output of these AND gates are labeled "UP" and "DOWN". These signals are fed to the loop filter LF and hence to the voltage controlled oscillator VCO for controlling same. UP means shifting the edges of the clock CLK to the left in Fig. 3 and DOWN means shifting to the right hand side. The phase detector PD so far described is an early-late phase detector well known in the art and therefore need not be further described.

Output signals from the shift registers SR1 and SR2 are also delivered to a second gate circuit GC2 which is a portion of the threshold control circuit TC (Fig.2). GC2 has an upper row of gates including a NOR gate connected to an AND gate and a lower row of gates including two AND gates, one of them having an inverting input as indicated. The signal values sampled at times A and B are inputted to the NOR gate and the first AND gate in the lower row. The signal sample at time T is supplied to the normal input of the second AND gate which is in the upper row, and to the inverting input of the third AND gate which is arranged in the lower row. The further inputs of the second and third AND gate respectively are connected to the preceding NOR and AND gates, respectively.

Signal samples taken at times A, T and B can show various patterns. Possible patterns are shown in column termed "signal samples" in the Table. Lines 3 and 4 of this table show signal samples 101 010 with irregular transitions. When two adjacent signal values as sampled at times A and B have the same level, for instance 1, the transition positioned between this pair of signal values 1, should have the same level 1 as shown in line 5 of the table. However, in the case of signal distortions also patterns like 101 or 010 may occur indicating an irregular transition and possibly non-valid received signals. These defects are evaluated by the second gate circuit GC2 which produces an ATC-UP signal in the upper gate row, and an ATC-DOWN signal in the lower gate row. The ATC-UP signal is used to increase the decision threshold of the trigger TR, and the ATC-DOWN signal is used to decrease the decision threshold. The ATC-UP and ATC-DOWN signals may be applied to a counter or integrator which controls the threshold value of the trigger TR. The ATC-UP and the ATC-DOWN pulses need not have the same value. In order to find the line OT of optimal threshold in Fig. 1, the area between abscissa, branch B1 and the line OT should be the same as the area between abscissa, branch BO and the line OT, i.e. the ATC-UP pulses and the ATC-DOWN pulses are weighted with the same value.

The ATC-UP and ATC-DOWN pulses may also be handled in circuitry (not shown) for non-linear characteristics before being subtracted in a differential counter which is used to set the decision threshold value of the trigger TR. By this circuitry, a high speed adaptation can be provided.

The table also shows the output of the early-late-phase detector in case of further patterns of signal samples. Furthermore, the logical equations are given for the several gate circuits.

The description above has shown that with addition of a gate circuit GC2 to existing circuitry in data receivers an adaptive threshold control can be carried out at low costs. These control signals for the decision threshold can be extracted from signals at time A, T, B already available in existing phase detectors PD. There are two combinations or patterns of signal samples which possibly do not correspond to valid received signals, namely 101 and 010. Counting these defects, a control loop from threshold control TC to the trigger TR is able to track the decision threshold level.

**Table**

| **Logical Equations** | **Signal Samples** | **Output** |
|---|---|---|
| A=T AND B/=T | 001,110 | down=1 |
| | | up=0 |
| A/=B AND B=T | 011,100 | up=1 |
| | | down=0 |
| A AND B AND NOT T | 101 | atc_down=1 |
| | | atc_up=0 |
| NOT A AND NOT B AND T | 010 | atc_up=1 |
| | | atc_down=0 |
| others | 000, 111 | up=0 |
| | | down=0 |
| | | atc_up=0 |
| | | atc_down=0 |

## Claims

1. A method of adjusting the decision threshold at a receiver for a data flow comprising different signal levels having logical high (1) and low (0) signal values and signal transitions positioned therebetween, wherein each two adjacent signal values and the transition therebetween are sampled, and when sampled signals are disturbedv, the transition between two adjacent signal values having the same level may take a value which deviates from the respective adjacent signal value and constitutes an "irregular" transition,
**characterized in that**
such irregular transitions between respective two adjacent signal values of the same level, which form respective deficient signal value pairs, are determined and the decision threshold is adjusted in direction of moving away from the deficient signal value pair which is just sampled.

2. The method of claim 1
wherein when two adjacent signal values are high (1) and the transition therebetween is low (0), the decision threshold value is decreased, and when two adjacent signal values are low (0)and the transition therebetween is high (1), the decision threshold value is increased.

3. The method of claim 1 or 2
wherein the size and direction of adjustment of the decision threshold are chosen so that in average the number of signal values high (1) of the deficient signal value pairs corresponds to the number of signal values low (0) of the remaining deficient signal value pairs.

4. An apparatus for carrying out the method of claim 1, the apparatus having a receiver, comprising
a trigger circuit (TR) which receives the data flow and detects signal level being high (1) or low (0) and has a decision threshold which can be changed,
a first shift register (SR1) having a number of cells for sampling two adjacent signal values in an interval of a clock frequency and for shifting the sampled values from cell to cell of the shift register so as to provide the sampled values to gate circuitry,
a second shift register (SR2) having a number of cells for sampling the signal transition between respective pairs of sampled signal values and for providing the sample transitions with a clock frequency to the gate circuitry,
**characterized in that**
the gate circuitry is designed to determine an irregular transition between two adjacent signal values of the same level which form a signal value pair, and outputting a control signal (ATC-UP, ATC-DOWN ) to the trigger circuit (TR) so as to adjust the decision threshold thereof in the direction of moving away from the signal value pair which is just sampled.

5. The apparatus of claim 4 wherein the gate circuitry includes a NOR gate and a first AND gate, which is connected to the first shift register (SR1), and a second AND gate as well as a third AND gate having an inverting input, these gates being connected to the second shift register (SR2), the output of the NOR gate being connected to a further input of the second AND gate and the output of the first AND gate to a further input of the third AND gate.

6. The apparatus of claim 4 or 5 wherein the first and second shift registers (SR1, SR2) are a portion of an early-late-phase detector (PD).
